# FASCICULE DE BREVET EUROPEEN

(11) **EP 1 399 025 B1**
(45) Date de publication et mention de la délivrance du brevet: **30.11.2005**
(21) Numéro de dépôt: 02747528.4
(22) Date de dépôt: 12.06.2002
(51) Int. Cl.: A21D 2/36, A21D 13/04

(54) **UTILISATION D'UNE FARINE DE CHICOREE POUR LA PREPARATION D'UNE PATE ALIMENTAIRE**
VERWENDUNG VON ZICHORIE-PULVER ZUR HERSTELLUNG VON LEBENSMITTELTEIG
USE OF A CHICORY FLOUR FOR PREPARATION OF A FOOD DOUGH

(30) Priorité: 15.06.2001 FR 0107862
(43) Date de publication de la demande: 24.03.2004
(73) Titulaire: Bossard, Sébastien, 44840 Les Sorinieres (FR); Leveque, Maurice, 56600 Locmine (FR); Marboutin, Francis, 33190 Lamothe-Landerson (FR)
(72) Inventeur: Bossard, Sébastien, 44840 Les Sorinieres (FR); Leveque, Maurice, 56600 Locmine (FR); Marboutin, Francis, 33190 Lamothe-Landerson (FR)
(74) Mandataire: Hennion, Jean-Claude
(86) Numéro de dépôt international: PCT/FR2002/002017
(87) Numéro de publication internationale: WO 2002/102165

(56) Documents cités:
- EP-A- 0 293 935
- EP-A- 0 850 569
- FR-A- 2 165 312
- FR-A- 2 474 053
- FR-A- 2 673 360
- FR-A- 2 698 762
- GB-A- 350 777
- US-A- 1 022 047
- US-A- 1 930 185
- US-A- 2 075 663
- US-A- 4 277 563

## Description

La présente invention est relative à l'utilisation d'une farine obtenue par broyage de racines de chicorée déshydratées pour la préparation d'une pâte alimentaire destinée à être cuite, ainsi qu'un procédé de préparation d'un aliment à partir d'une telle pâte.

Dans l'ensemble de la présente demande, on entend par le terme "chicorée", la chicorée dite "à grosse racine", cette dernière étant réputée pour être utilisée, après torréfaction et concassage, mêlée à du café.

Ainsi, on décrit dans le US-A-2 075 663 à un procédé de production de grains de chicorée. Pour ce faire, on déshydrate des racines de chicorée, on les réduit à l'état de pulpe puis de farine, et on mélange les liquides extraits avec la farine, de manière à constituer une masse homogène qui est ensuite compressée pour donner des grains de formes diverses.

La racine de chicorée est bien connue pour ses vertus diurétiques. Elle a également des effets contre les affections du foie, la constipation et les affections diverses de la peau.

Elle est riche en sels minéraux, et renferme glucides, protides, lipides, vitamines B, C, E et K.

Elle renferme par ailleurs une quantité élevée d'un glucide de la famille des fructanes, à savoir l'inuline, qui se retrouve à l'état intact, dans le produit séché. Ce composé est connu pour contribuer à l'équilibre de la flore intestinale.

Le document FR-A-2 474 053 se rapporte à la récupération d'inuline et de fructose. L'inuline est récupérée à partir de matières végétales et on hydrolyse l'inuline en fructose. Comme matière végétale, on utilise des racines de chicorée, lesquelles sont hachées pour former une pâte.

Par ailleurs, le document US-A-4 277 563 concerne un procédé de préparation de fructose. Celui-ci est obtenu à partir de plantes contenant un polymère du fructose, tel que l'inuline. Il peut s'agir notamment de chicorée.

L'art antérieur montre d'autres applications de la racine de chicorée. Ainsi, le document EP-A-0 293 935 se rapporte à un additif pour l'alimentation du bétail qui contient des produits résultant de la transformation de racines de chicorée. La transformation peut résulter de la décomposition enzymatique d'une purée de racines préalablement hachées et moulues.

FR-A-2 165 312 concerne quant à lui des produits alimentaires de régime. Dans ceux-ci, les matières grasses habituelles sont remplacées par de l'huile de paraffine ou de vaseline. Dans un exemple particulier, un des ingrédients nécessaire à la fabrication de pralines est de la farine de chicorée torréfiée.

Le document EP-A-0 850 569 porte sur la préparation d'un aliment destiné à améliorer l'équilibre de la flore intestinale de l'animal ou de l'homme.

Pour ce faire, on utilise les caractéristiques nutritionnelles de l'inuline contenue dans la racine de chicorée, associées à celles de diverses céréales, dont on fait une pâte gélatinisée contenant une source d'amidon, afin de faire disparaître l'amertume apportée par les sesquipertènes contenus naturellement dans la racine de chicorée et à former une matrice dans laquelle est incluse la farine de chicorée. Enfin, on extrude cette pâte pour en faire des flocons ou des granulés.

Il s'agit ici de la fabrication d'une pâte destinée non pas à être cuite, mais prégélatinisée (par un procédé de chauffage) et ensuite extrudée. La farine n'est utilisée ici qu'à des fins nutritionnelles.

Les présents demandeurs ont constaté, de manière surprenante, que la racine de chicorée réduite en farine se prêtait très bien à des applications alimentaires, à savoir la préparation d'une pâte alimentaire destinée à être cuite.

Ils ont de plus constaté l'utilisation de cette farine contenant l'ensemble des constituants de la racine avait des effets bénéfiques sur les produits fabriqués à partir de ladite pâte alimentaire.

La présente invention concerne donc en premier lieu l'utilisation d'une farine obtenue par broyage de racines de chicorée déshydratées pour la préparation d'une pâte alimentaire destinée à être cuite, ladite pâte étant choisie dans le groupe constitué de la pâte à pain, la pâte à viennoiserie et la pâte à biscuit.

De préférence, les espèces botaniques utilisées dans le cadre de l'invention sont Cichorium intybus L. et Cichorium endivia L.

Par l'expression "pâte alimentaire destinée à être cuite", on entend une pâte alimentaire, solide, voire semi-liquide devant subir un traitement thermique à une température supérieure à 150° C.

Par l'expression "racines de chicorée déshydratées", on entend des racines déshydratées n'ayant subi aucun traitement antérieur ou postérieur tel qu'une torréfaction.

De plus, on entend par "viennoiserie", les produits de boulangerie fine autre que le pain, cette dénomination englobant aussi les produits à pâte feuilletée levée. Des exemples de tels produits sont les brioches, le pain de mie.

De préférence, on utilise 1 à 100 % en poids de ladite farine, le pourcentage étant exprimé par rapport au poids total de farine rentrant dans la composition de la pâte.

Dans une telle gamme de pourcentages, ce sont les qualités nutritionnelles de la racine de chicorée qui sont mises en avant.

Selon un aspect spécifique de l'invention, on utilise 1 à 41 % en poids de farine telle que définie ci-dessus.

Dans cette gamme de pourcentages et lorsque l'on souhaite fabriquer une pâte à pain, ce sont les aspects fonctionnels de la racine de chicorée qui sont intéressantes, à savoir la nature de ses composants spécifiques et son interaction avec la (les) farine(s) additionnelle(s) qui fournit (fournissent) le complément à cent pour cent. Cela se traduit sur le plan pratique par une amélioration du produit fini.

Enfin, selon une forme particulièrement préférée de l'invention, l'éventuel complément à cent pour cent de farine est formé de farine de blé et/ou de triticale.

L'invention se rapporte également à un procédé de fabrication d'un aliment à partir d'une pâte alimentaire choisie parmi la pâte à pain, la pâte à viennoiserie ou la pâte à biscuit, selon lequel on confectionne ladite pâte, on la pétrit, éventuellement on la laisse pointer, puis on la faire cuire à une température supérieure à 150° C, caractérisé par le fait qu'on utilise, pour la confection de la pâte, de la farine obtenue par broyage de racines de chicorée déshydratées.

Selon des caractéristiques particulières de ce procédé :
- on utilise 1 à 100 % en poids de ladite farine, le pourcentage étant exprimé par rapport au poids total de farine rentrant dans la composition de la pâte;
- on utilise 1 à 41 % en poids de ladite farine ;
- l'éventuel complément à cent pour cent de farine est formé de farine de blé et/ou de triticale.

D'autres caractéristiques et avantages de la présente invention apparaîtront à la lecture de la description détaillée qui va suivre de modes de réalisation préférentiels, donnés à titre non limitatif.

Pour fabriquer la farine, on procède au nettoyage et au séchage forcé de racines de chicorée, de préférence quelques jours après la récolte, ceci afin que toutes les propriétés des constituants des racines soient conservées.

Cette déshydratation est de préférence poussée jusqu'à ce que l'on ne mesure pratiquement plus d'eau dans les racines. De ce fait, elles peuvent alors se conserver pendant plusieurs mois.

Les racines peuvent alors être broyées pour obtenir une farine, selon toute méthode connue de l'homme du métier.

Elle peut être employée seule ou en mélange avec une ou plusieurs autres farines.

Selon l'invention, c'est l'interaction de l'ensemble des constituants de la farine de chicorée avec les autres ingrédients de la pâte qui procure les améliorations constatées.

Ainsi, lorsque l'on mélange la farine de chicorée avec de la farine de blé, les améliorations constatées sont notamment les suivantes :

Pour le pain, lorsqu'on utilise ladite farine de chicorée dans une proportion inférieure à 2% du poids de farine de blé, on constate une amélioration du moelleux, de la conservation, de la saveur et une augmentation du développement du produit à la cuisson.

De 2 à 5% du poids de farine de blé mise en oeuvre, il y a alors amélioration du moelleux, de la conservation, de la saveur, accentuation de la couleur de la mie vers le marron - gris, typique des pains rustiques, ainsi qu'une augmentation du développement du produit à la cuisson.

Entre 5 % et 15 % du poids de farine de blé mise en oeuvre, on constate une accentuation très franche de la couleur de la mie qui devient alors marron, typique de certains pains de campagne, à saveur légèrement amère, et à teneur en éléments nutritionnels plus intéressante.

Pour les pâtes feuilletées, lorsqu'on incorpore jusqu'à 5 % du poids de farine de blé mise en oeuvre, on constate une amélioration du moelleux, de la conservation, de la saveur, avec la possibilité de substituer une partie de la matière grasse mise habituellement en oeuvre (fonction de la quantité de farine de chicorée utilisée) sans altération du feuilletage. De plus, on obtient une meilleure conservation du croustillant dans le temps et meilleure tolérance des produits à la surgélation.

Pour les produits de la boulangerie fine tels que la brioche et le pain de mie, on incorpore jusqu'à 10 % du poids de farine de blé mise en oeuvre et on constate une amélioration du moelleux, de la conservation, de la saveur, avec la possibilité de substituer une partie de la matière grasse mise en oeuvre (fonction de la quantité de farine de chicorée utilisée).

Par ailleurs, on obtient une augmentation du développement du produit à la cuisson, une meilleure conservation et une meilleure tolérance des produits à la surgélation.

Pour les produits de biscuiterie tels que des gâteaux sablés, lorsqu'on incorpore jusqu'à 20 % du poids de farine de blé mise en oeuvre, on a une amélioration de la consistance du produit fini, la possibilité de substituer une partie de la matière grasse mise en oeuvre (fonction de la quantité de farine de chicorée utilise) et une meilleure conservation.

De plus, on constate une augmentation de la saveur des produits et particulièrement de ceux appauvris en matière grasse.

De 20 à 100 % d'incorporation, il y a augmentation du pouvoir nutritionnel du produit (augmentation de la teneur en fibre) en liaison avec une saveur amère très présente.

On décrira ci-après plus précisément des utilisations possibles de la farine selon l'invention dans le domaine de la boulangerie et de la viennoiserie.

### Exemple 1 : fabrication de pain.

Dans un pétrin, on introduit environ 970 grammes de farine de blé, 10 grammes de gluten vital de blé, 0,12 grammes d'amylases fongiques, 0,10 grammes d'acide ascorbique, 20 grammes de farine de chicorée, 15 grammes de levure, 22 grammes de sel et 600 à 620 grammes d'eau.

De préférence le pétrin est à axe oblique et à deux vitesses de rotation. Dans ce cas, on procède au pétrissage de la pâte à vitesse lente pendant 5 minutes, puis à vitesse rapide pendant 15 minutes.

On laisse alors la pâte se détendre à 25°C pendant une heure.

Après pesage et division en pâtons, on laisse reposer de telle sorte que l'apprêt puisse se faire pendant 90 minutes environ, à une température de l'ordre de 24-26°C.

On peut alors procéder à la cuisson de manière traditionnelle, à une température de l'ordre de 220°C, avec buée, pendant 25 à 30 minutes.

La farine de racines de chicorée confère aux pains ainsi obtenus conservation et moelleux. Elle donne également aux produits une légère coloration de la croûte, ainsi qu'une saveur particulière. L'ampleur de cette saveur est bien entendu fonction du pourcentage de farine de racines de chicorée incorporé dans la pâte.

### Exemple 2 : fabrication de produits de viennoiserie (brioches).

Dans un pétrin, on introduit environ 750 grammes de farine de blé, 16 grammes de gluten vital de blé, 200 grammes de poudre de beurre, 0,20 grammes d'amylases fongiques, 0,13 grammes d'acide ascorbique, 30 grammes de chicorée, 50 grammes de levure, 22 grammes de sel et 10 oeufs tempérés (20-22°C).

De préférence le pétrin est à axe oblique et à deux vitesses de rotation. Dans ce cas, on procède au pétrissage de la pâte à vitesse lente pendant 4 minutes, puis à vitesse rapide pendant 5 minutes.

On introduit alors dans la pâte 150 grammes de sucre et on pétrit à nouveau à vitesse rapide pendant 15 à 20 minutes.

On laisse alors pointer la pâte 30 minutes à 25°C, puis on la pèse et on la divise de manière à former des pains bâtards de 400 grammes.

On laisse ensuite les pâtons reposer pendant 10 à 20 minutes à température ambiante.

Après façonnage et apprêt d'une durée de 90 minutes à 24-26°C, on cuit les pâtons à 180°C avec buée pendant 30 minutes.

Comme dans l'exemple 1, la farine de racines de chicorée apporte ici également moelleux et conservation. De par sa composition riche en fibres, elle permet une meilleure rétention de l'eau dans la pâte. Cela est du plus grand intérêt lorsque les pâtons sont destinés à être surgelés à l'état cru, ce qui est couramment le cas de produits de viennoiserie tels que des croissants ou des pains au chocolat. Lors de leur décongélation préalable à une cuisson ultérieure, de tels produits ont tendance à perdre une partie de l'eau qu'ils renferment. Ce phénomène est limité grâce à la farine selon l'invention, ce qui ne peut être que bénéfique pour l'apparence, la consistance et le goût des produits cuits.

### Exemple 3 : fabrication de biscuits (sablés).

Dans un pétrin, on introduit environ 590 grammes de farine de blé de type 55, 410 grammes de farine selon l'invention, 50grammes de beurre, 50 grammes de sucre, un jaune d'oeuf, et 10 à 20 grammes de sel.

De préférence le pétrin est à axe oblique et à deux vitesses de rotation. Dans ce cas, on procède au pétrissage de la pâte à vitesse lente pendant 15 minutes.

On fait alors une boule avec la pâte, que l'on conserve à 3-4°C pendant 30 à 45 minutes.

Après avoir laminé la pâte, on détaille les gâteaux à l'emporte pièce et on les cuit à 150-200°C pendant 15 à 25 minutes.

La farine de racine de chicorée est utilisée ici comme ingrédient principal de la pâte. C'est donc sa composition nutritionnelle qui est mise en avant.

En effet, les gâteaux ainsi fabriqués sont riches en inuline qui constitue plus de 55 % de la racine de chicorée.

Comme déjà mentionné, cette fibre alimentaire naturelle permet de rééquilibrer la flore intestinale, ce qui contribue à un meilleur transit.

On donne ci-après les caractéristiques de produits dans lesquels de la farine de chicorée a été introduite, comparativement à des produits dans lesquels de l'inuline sous forme de poudre a été introduite.

Domaines d'application testés : panification et produits de boulangerie fine (pain de mie, brioche)

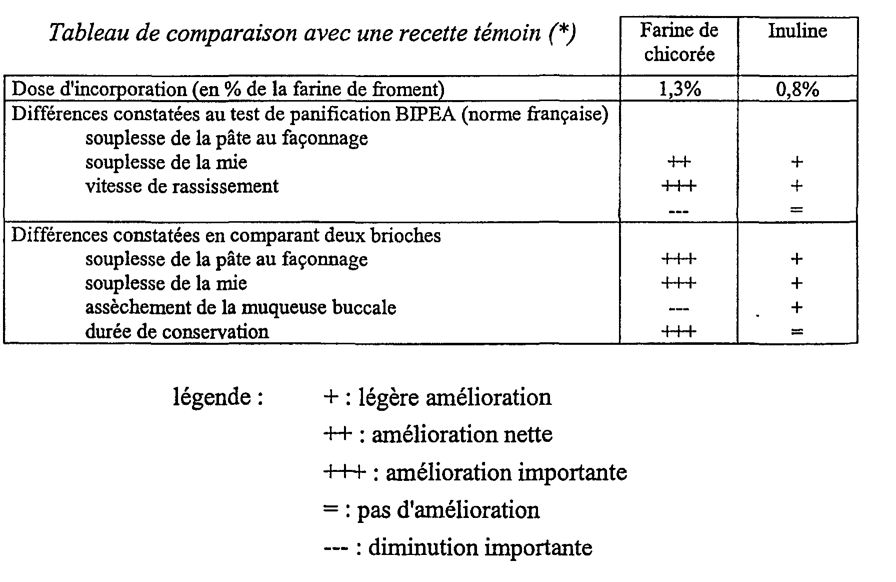

La norme française indiquée dans le tableau ci-dessus est la suivante : NFV 03-716.

| (*) : la recette témoin est constituée de : | | |
|---|---|---|
| | en % | pour 1000 gr |
| Farine de froment | 98,984% | 989,84 gr |
| Gluten | 1% | 10 gr |
| Enzymes fongiques : | 0,012% | 0,12 gr |
| Acide ascorbique : | 0,004% | 0,04 gr |

On compare ci-après l'incidence de l'ajout de farine de chicorée à la farine de froment :
produits comparés : farine de froment / farine de froment + farine de racine de chicorée :

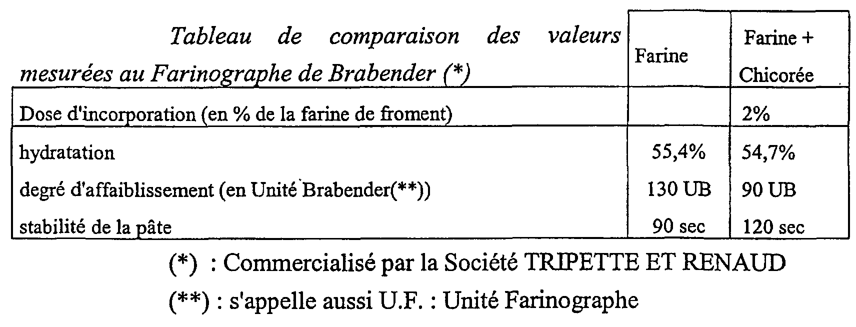

Le degré d'affaiblissement et la stabilité de la pâte permettent d'évaluer l'homogénéité du réseau de gluten d'une farine, directement responsable de l'aptitude de la farine à se travailler facilement, mais également important pour la souplesse de la mie et la conservation du produit fini.

On note qu'après l'ajout de la Farine de chicorée, la stabilité de la pâte s'en trouve significativement allongée et que le degré d'affaiblissement diminue lui aussi de façon importante. Ceci témoigne de la capacité du réseau (auquel on à ajouté la farine de chicorée) à donner une pâte souple, homogène et stable, permettant une amélioration nette du travail de la pâte et du produit fini sur le plan moelleux et conservation.

## Revendications

1. Utilisation d'une farine obtenue par broyage de racines de chicorée déshydratées pour la préparation d'une pâte alimentaire destinée à être cuite, **caractérisée par le fait que** ladite pâte est choisie dans le groupe constitué de la pâte à pain, la pâte à viennoiserie et la pâte à biscuit.

2. Utilisation selon la revendication 1, **caractérisée par le fait que** la farine est obtenue par broyage de racines de chicorée d'au moins une des espèces Cichorium intybus L. et Cichorium endivia L.

3. Utilisation selon la revendication 1 ou 2, **caractérisée par le fait qu'**on utilise 1 à 100 % en poids de ladite farine, le pourcentage étant exprimé par rapport au poids total de farine rentrant dans la composition de la pâte.

4. Utilisation selon la revendication 3, **caractérisée par le fait qu'**on utilise 1 à 41 % en poids de ladite farine.

5. Utilisation selon la revendication 3 ou 4, **caractérisée par le fait que** l'éventuel complément à cent pour cent de farine est formé de farine de blé et/ou de triticale.

6. Procédé de fabrication d'un aliment à partir d'une pâte alimentaire choisie parmi la pâte à pain, la pâte à viennoiserie ou la pâte à biscuit, selon lequel on confectionne ladite pâte, on la pétrit, éventuellement on la laisse pointer, puis on la faire cuire à une température supérieure à 150° C, **caractérisé par le fait qu'**on utilise, pour la confection de la pâte, de la farine obtenue par broyage de racines de chicorée déshydratées.

7. Procédé selon la revendication 6, **caractérisé par le fait qu'**on utilise 1 à 100 % en poids de ladite farine, le pourcentage étant exprimé par rapport au poids total de farine rentrant dans la composition de la pâte.

8. Procédé selon la revendication 7, **caractérisé par le fait qu'**on utilise 1 à 41 % en poids de ladite farine.

9. Procédé selon la revendication 7 ou 8, **caractérisé par le fait que** l'éventuel complément à cent pour cent de farine est formé de farine de blé et/ou de triticale.

## Patentansprüche

1. Verwendung eines Mehls, erhalten durch Zermahlen von getrockneten Zichorienwurzeln zur Herstellung eines Nahrungsmittelteigs, der dazu vorgesehen ist gebacken zu werden, **gekennzeichnet durch** die Tatsache, daß der Teig gewählt ist, aus der Gruppe, die besteht aus Brotteig, Gebäckteig und Biskuitmasse.

2. Verwendung nach Anspruch 1, **gekennzeichnet durch** die Tatsache, daß das Mehl erhalten wird **durch** Zermahlen von Zichorienwurzeln von wenigstens einer der Arten Chicorium intybus L. und Chicorium endivia L.

3. Verwendung nach Anspruch 1 oder 2, **gekennzeichnet durch** die Tatsache, daß man 1 bis 100 Gewichtsprozent des Mehls verwendet, wobei der Prozentanteil **durch** das Gesamtgewichtsverhältnis von Mehl ausgedrückt wird, daß in die Zusammensetzung des Teigs eintritt.

4. Verwendung nach Anspruch 3, **gekennzeichnet durch** die Tatsache, daß man 1 bis 41 Gewichtsprozent des Mehls verwendet.

5. Verwendung nach Anspruch 3 oder 4, **gekennzeichnet durch** die Tatsache, daß die eventuelle Vervollständigung auf 100 Prozent Mehl gebildet wird **durch** Weizenmehl und/oder Triticalemehl.

6. Verfahren zur Herstellung eines Nahrungsmittels aus einem Nahrungsmittelteig, gewählt unter Brotteig, Gebäckteig oder Biskuitmasse gemäß dem man den Teig zubereitet oder ihn knetet, gegebenenfalls ihn gehen läßt und dann bei einer Temperatur über 150°C backt, **gekennzeichnet durch** die Tatsache, daß man zur Zubereitung des Teiges das Mehl verwendet, das **durch** Zermahlen von getrockneten Zichorienwurzeln erhalten ist.

7. Verfahren nach Anspruch 6, **gekennzeichnet durch** die Tatsache, daß man 1 bis 100 Gewichtsprozent des Mehls verwendet, wobei der Prozentanteil ausgedrückt ist im Verhältnis zum Gesamtgewicht an Mehl, das in die Zusammensetzung des Teigs eintritt.

8. Verfahren nach Anspruch 7, **gekennzeichnet durch** die Tatsache, daß man 1 bis 41 Gewichtsprozent des Mehls verwendet.

9. Verfahren nach Anspruch 7 oder 8, **gekennzeichnet durch** die Tatsache, daß die eventuelle Vervollständigung auf 100 Prozent Mehl gebildet wird aus Weizenmehl und/oder Triticalemehl.

## Claims

1. The use of a flour obtained by milling dehydrated chicory roots in preparing a food dough for baking, the use being **characterised by** the fact that said dough is selected from the group constituted by bread dough, Viennese pastry, and biscuit mix.

2. A use according to claim 1, **characterised by** the fact that the flour is obtained by milling roots of chicory of at least one of the following species: Cichorium intybus L and Cichorium endivia L.

3. A use according to claim 1 or claim 2, **characterised by** the fact that 1% to 100% by weight of said flour is used, the percentage being expressed relative to the total weight of flour entering into the composition of the dough.

4. A use according to claim 3, **characterised by** the fact that 1% to 41% by weight of said flour is used.

5. A use according to claim 3 or claim 4, **characterised by** the fact that the balance, if any, up to 100% of the flour is formed by wheat flour and/or by triticale flour.

6. A method of making food from a food dough selected from bread dough, Viennese pastry, and biscuit mix, in which said dough is prepared, kneaded, optionally allowed to rise, and then baked at a temperature greater than 150°C, the method being **characterised by** the fact that in preparing the dough, use is made of the flour that is obtained by milling dehydrated chicory roots.

7. A method according to claim 6, **characterised by** the fact that 1% to 100% by weight of said flour is used, the percentage being expressed relative to the total weight of flour entering into the composition of the dough.

8. A method according to claim 7, **characterised by** the fact that 1% to 41% by weight of said flour is used.

9. A method according to claim 7 or claim 8, **characterised by** the fact that the balance, if any, of the flour, up to 100%, is constituted by wheat flour and/or by triticale flour.
